# EUROPEAN PATENT SPECIFICATION

(11) **EP 1 141 151 B1**
(45) Date of publication and mention of the grant of the patent: **01.06.2005**
(21) Application number: 99958508.6
(22) Date of filing: 29.11.1999
(51) Int. Cl.: C09D 177/12, C08G 69/44, C08G 63/685

(54) **POLYESTERAMIDE BASED AIR-DRYING COATING COMPOSITION**
LUFTTROCKNENDE BESCHICHTUNGS-ZUSAMMENSETZUNG BASIEREND AUF POLYESTERAMID
COMPOSITION DE REVETEMENT A BASE DE POLYESTERAMIDE SECHANT A L'AIR AMBIANT

(30) Priority: 01.12.1998 EP 98204050
(43) Date of publication of application: 10.10.2001
(73) Proprietor: DSM IP Assets B.V., 6411 TE Heerlen (NL)
(72) Inventor: VAN BENTHEM, Rudolfus, Antonius, Theodorus, Maria, NL-6141 BR Sittard (NL); BEETSMA, Jochum, NL-8022 RF Zwolle (NL); PONS, Dick, Adriaan, NL-8015 CD Zwolle (NL); GROOTOONK, Lambert, NL-8033 AP Zwolle (NL); WOLFF, Johan, NL-8024 EB Zwolle (NL)
(74) Representative: van Tol-Koutstaal, Charlotte Adeliene
(86) International application number: PCT/NL1999/000728
(87) International publication number: WO 2000/032708

(56) References cited:
- US-A- 4 446 301
- US-A- 5 053 463
- US-A- 5 124 433

## Description

The invention relates to a polymer and an airdrying coating composition comprising this polymer.

Airdrying coatings are disclosed in the proceedings of the International Conference in Organic Coatings of July 7-11, 1997, pages 295-303. The restrictions on the emission of solvents in paints makes the need for environmental friendly systems important. For industrial applications, powder coatings and water-borne systems are the most attractive alternative and are already in use. For architectural purposes there is a limited acceptance of water-borne systems. In this application coatings having enhanced durability are becoming more and more accepted as an alternative to the traditional systems, not only because of their technical performance and economical benefits but also for their environmental effects.

It is the object of the invention to provide a polymer which results in solvent borne, high-solid or water borne coatings having a sufficiently hard film obtained after airdrying and furthermore having a combination of desirable properties for different types of application, such as, for example, flexibility, outdoor durability, adhesion, fast drying, high solids content and early hardness.

The invention is characterized in that the polymer is a polyesteramide containing at least two carboxyalkylamide groups derived from an unsaturated (C₁₀-C₂₈) carboxylic acid per molecule.

The carboxyalkylamide group can be represented as follows: 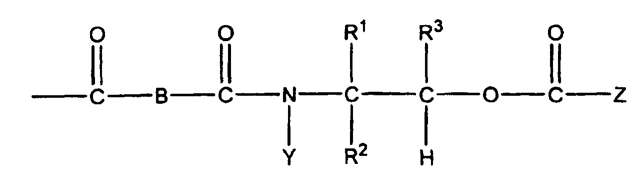 in which:
Y= 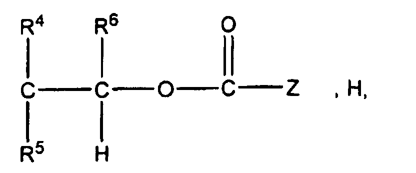 (C₁-C₂₀)(cyclo)alkyl or (C₆-C₁₀)aryl
B = (C₂-C₂₄), optionally substituted, aryl or (cyclo)alkyl aliphatic diradical and, in which 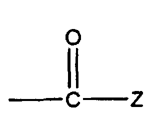 is derived from an unsaturated (C₁₀-C₂₈) carboxylic acid,
R¹, R², R³, R⁴, R⁵ and R⁶ may, independently of one another, be the same or different, H, (C₆-C₁₀) aryl or (C₁-C₈)(cyclo)alkyl radical or

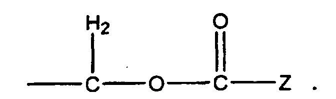

The polyesteramide results in cured solvent borne, high solid or water borne coatings with a good performance in terms of, for example, organic solvent compatibility, flexibility, outdoor durability, solvent resistance, early hardness, high end hardness and good throughdrying in thick layers.

These coatings can be used in a broad range of applications.

The primer coatings comprising the polymer according to the invention show, a high hardness, a good adhesion, a good flexibility, a good grindability and good properties to be overcoated.

The topcoats comprising the polymer according to the invention show, for example, a high hardness, an early hardness, an excellent durability and flexibility.

According to a preferred embodiment of the invention the iodine value of the polymer ranges between 30 and 210 gr I₂/100 gram polymer (according to ASTM D-1059/85) and more preferably between 50 and 120.

The acid value generally ranges between 0 and 40 mg KOH/gram resin and preferably between 5 and 10 mg KOH/gram resin for solvent based resins and preferably between 5 and 40 mg KOH/gram resin for water based emulsions.

Preferably, the amine value is lower than 3 mg KOH/gram resin and preferably lower than 1.

The oil length generally is between 10 and 80% and preferably between 30 and 70%.

According to a preferred embodiment of the invention, the polyesteramide is a polymer according to formula (I): 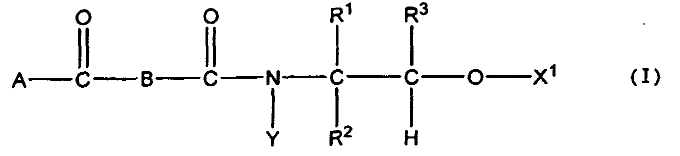 in which:
Y= 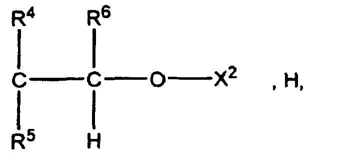 (C₁-C₂₀)(cyclo)alkyl or (C₆-C₁₀)aryl
A= 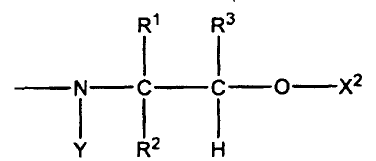 or OH,
B = (C₂-C₂₄), optionally substituted, aryl or (cyclo)alkyl aliphatic diradical,
X¹= 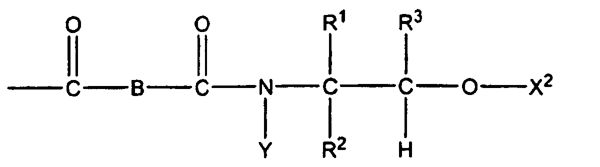
X² = H, X¹ OR 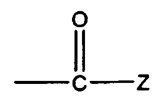 in which 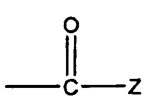 is derived from an unsaturated (C₁₀-C₂₈) carboxylic acid,
R¹, R², R³, R⁴, R⁵ and R⁶ may, independently of one another, be the same or different, H, (C₆-C₁₀) aryl or (C₁-C₈)(cyclo)alkyl radical or CH₂-OX².

The weight average molecular mass of the polymer is generally between 800 and 100,000, and preferably between 2000 g/mol and 60,000 g/mol.

The number average molecular mass is generally between 600 and 50,000 and preferably between 1000 and 20000.

The unsaturated carboxyalkylamide functionality derived from the unsaturated carboxylic acid is generally between 2 and 250 and preferably between 2 and 50.

The hydroxyalkylamide functionality is generally lower than 50, more preferably lower than 20.

The ratio of hydroxyl alkylamide endgroups: carboxy alkylamide endgroups is generally between 0.001:1 and 10:1 and more preferably between 0.01:1 and 1:1.

Functionality is understood to be the average number of reactive groups of the type in question per molecule in the polymer composition.

The preferred unsaturated carboxylic acids are unsaturated monocarboxylic fatty acids.

Suitable unsaturated fatty acids generally have 10 to 28 carbon atoms. Examples of useful unsaturated fatty acids are dehydrated castor oil fatty acid, linoleic acid, and linolenic acid. Examples of useful natural oil fatty acids are tall oil fatty acid, sunflower oil fatty acid, corn oil fatty acid, cottonseed oil fatty acid, peanut oil fatty acid, linseed oil fatty acid, soybean oil fatty acid, rapeseed oil fatty acid, rice bran oil fatty acid, safflower oil fatty acid and sesame oil fatty acid. Mixtures of unsaturated fatty acids may also be used.

Dimers having about 36 to about 44 carbon atoms and trimers having about 44 to about 66 carbon atoms may also be used in minor amounts.

Generally, less than 20% of the carboxyalkylamide groups can be derived from α,β-unsaturated acids, aromatic acids or saturated aliphatic acids.

Examples of α,β-unsaturated acids are (meth)acrylic acid, crotonic acid and monoesters or monoamides of itaconic acid, maleic acid and fumaric acid and dihydro dicyclopentadienyl maleate.

Suitable saturated aliphatic acids are for example, 2-ethyl hexanoic acid, lauric acid, versatic acid and stearic acid.

Suitable aromatic acids are, for example, benzoic acid and tertiairy butyl benzoic acid.

Z can be substituted with for example ester groups, ether groups, amide groups and alcohol groups.

Examples of hydroxy functional fatty acids are 12-hydroxy stearic acid and castor oil acid.

The R groups may together or with neighbouring carbon atoms form part of a cycloalkyl group.

According to another preferred embodiment of the invention, the polymer is a polymer according to formula (II): 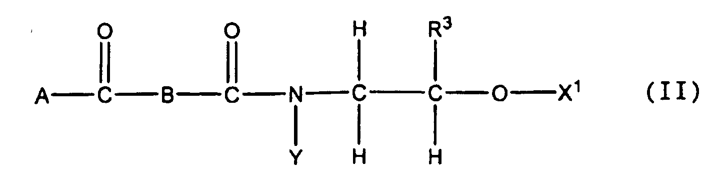 in which:
Y= 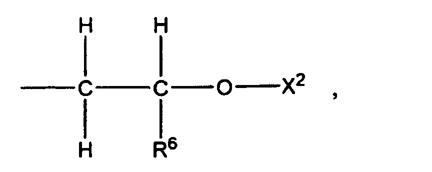 H, (C₁-C₂₀)(cyclo)alkyl or (C₆-C₁₀)aryl,
A= 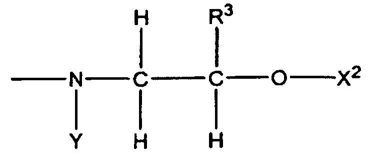 or OH,
B = (C₂-C₂₀), optionally substituted, aryl or (cyclo)alkyl aliphatic diradical,
X¹= 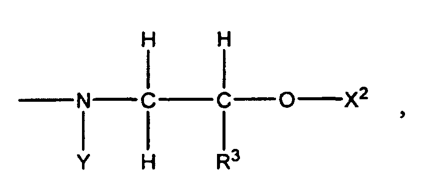
X² = H, X¹ OR 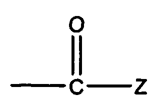 in which 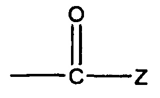 is derived from an unsaturated (C₁₀-C₂₈) carboxylic acid,
R³ = H, (C₆-C₁₀) aryl or (C₁-C₈)alkyl radical and
R⁶ = H, (C₆-C₁₀) aryl or (C₁-C₈)alkyl radical.

According to another preferred embodiment of the invention the unsaturated carboxy alkylamide functionality is ≥ 5 and the polymer can be represented by formula (III): 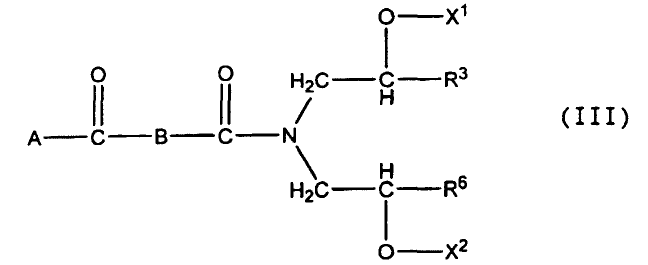 in which:
A= 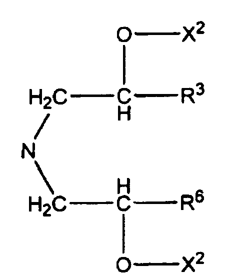 or OH
B = (C₂-C₁₂), optionally substituted, aryl or (cyclo)alkyl aliphatic diradical,
X¹= 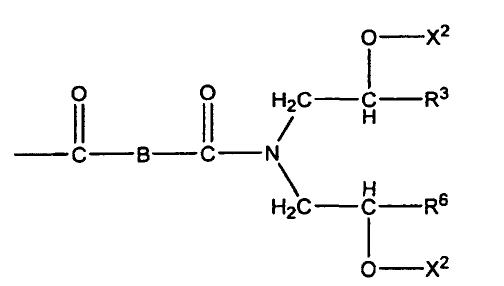
X² = H, X¹ OR 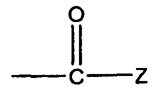 in which 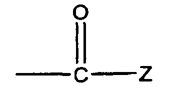 is derived from an unsaturated (C₁₀-C₂₈) carboxylic acid,
R³ = H or (C₆-C₁₀) aryl or (C₁-C₈)(cyclo)alkyl radical and
R⁶ = H or (C₆-C₁₀) aryl or (C₁-C₈)(cyclo)alkyl radical

Preferably R³ and R⁶ are (C₁-C₄) alkyl.

According to another preferred embodiment of the invention R³ and R⁶ are methyl or ethyl.

B may be saturated or unsaturated.

B may be substituted with for example a (C₁-C₁₂) alkyl group, which may be saturated or unsaturated. Preferably C₁ is used.

B may be for example a (methyl-)1,2-ethylene, (methyl-)1,2-ethylidene, 1,3-propylene, (methyl-)1,2-cyclohexyl, (methyl-)1,2-phenylene, 1,3-phenylene, 1,4-phenylene, 2,3-norbornyl, 2,3-norbornen-5-yl and/or (methyl-)1,2 cyclohex-4-enyl radical.

Depending on the starting monomers chosen, the variables B, R¹, R², R³, R⁴, R⁵ and R⁶ in the molecule or mixture of molecules can be chosen to be the same or different per variable.

The polymer composition applied in the invention is generally a composition comprising higher and lower oligomers, which usually contains less than 50 wt.%, preferably less than 30 wt.%, of oligomers having a molecular weight smaller than 600.

The polymer can, for example, be obtained in a two step process by causing a cyclic anhydride to react with an alkanolamine, at a temperature between, for example, 20°C and 150°C, to form a β-hydroxyalkylamide, after which, at temperatures between, for example, 120°C and 180°C, a polyesteramide is obtained through polycondensation with water being removed through destillation. In the second step fatty acids are added after which esterification with the β-hydroxyalkylamide groups of the polyesteramide takes place.

The polymer can also be prepared in a one-step process in which the anhydride, amine and fatty acid are polycondensed all together to the desired product.

The reaction preferably takes place with an organic solvent, for example, xylene.

The removal of water through destillation can, for example, take place at 1 bar, or azeotropically.

The cyclic anhydride is preferably an anhydride according to formula (IV): 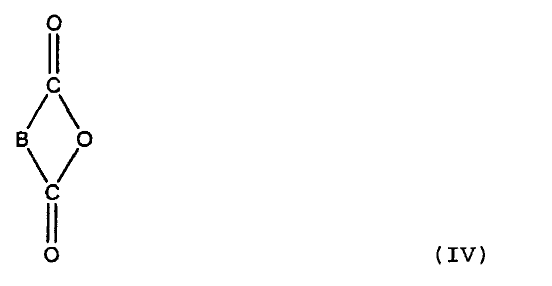 in which B has the meaning specified above.

Examples of suitable cyclic anhydrides are phthalic anhydride, tetrahydrophthalic anhydride, hexahydrophthalic anhydride, 5-norbornene-2,3-dicarboxylic anhydride, norbornene-2,3-dicarboxylic, anhydride, maleinised C₁-C₁₀ alkylester of unsaturated fatty acids, 2-dodecene-1-yl-succinic anhydride, maleic anhydride, (methyl) succinic anhydride, (C₆-C₁₈) alkenyl succinic anhydride, glutaric anhydride, 4-methylphthalic anhydride, 4-methylhexahydrophthalic anhydride and 4-methyltetrahydrophthalic anhydride.

The alkanol is preferably an alkanolamine according to formula (V): 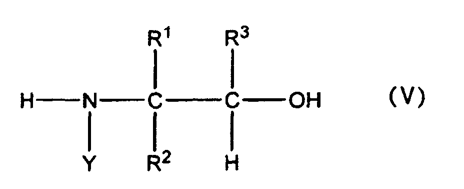 in which:
Y= 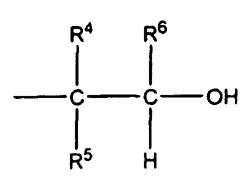 or (C₁-C₂₀)(cyclo)alkyl, and
R¹, R², R³, R⁴, R⁵ and R⁶ may, independently of one another, be the same or different, H, (C₆-C₁₀) aryl or (C₁-C₈)(cyclo)alkyl radical or CH₂OH.

The alkanolamine may be a monoalkanolamine, a dialkanolamine, a trialkanolamine or a mixture hereof.

If monoalkanolamines are used in one of the possible polymer syntheses, linear polymers with a functionality of 2 can be obtained. Depending on the application desired, a linear or an entirely or partly branched polymer can be chosen, in which case the degree of branching can be set via the alkanolamines chosen.

If a highly branched structure with a high functionality is desired, di- or trialkanolamines are used as the starting compound.

Examples of suitable monoalkanolamines are ethanolamine, 1-(m)ethyl ethanolamine, n-butyl ethanolamine, 1-(m)ethyl isopropanolamine, isobutanolamine, β-cyclohexanolamine, n-butyl isopropanolamine and isopropanolamine.

Examples of suitable dialkanolamines are 3-amino-1,2-propanediol, 2-amino-1,3-propanediol diisobutanolamine (bis-2-hydroxy-1-butyl)amine), di-β-cyclohexanolamine and diisopropanolamine (bis-2-hydroxy-1-propyl)amine).

A suitable trialkanolamine is for example tris(hydroxymethyl)aminomethane.

Preferably use is made of a β-alkyl-substituted β-hydroxyalkylamine. Examples are (di)isopropanolamine, cyclohexyl isopropanolamine, 1-(m)ethyl isopropanolamine, (di)isobutanolamine, di-β-cyclohexanolamine and/or n-butyl isopropanolamine.

This results in polymer compositions with improved resistance to hydrolysis.

Most preferable diisopropanolamine and diisobutanolamine are applied.

The anhydride : alkanolamine equivalent ratio is generally between 1.0:1.0 and 1.0:1.8. Preferably the ratio is between 1:1.02 and 1:1.5.

In addition to β-carboxyalkylamide groups, the polymer may also contain β-hydroxyalkylamide and carboxyl groups, in amounts of between 0.01 and 2.0 mg equivalent/gram of polymer. The number of carboxylic acids and β-hydroxyalkylamide groups can be controlled by the ratio of the different starting materials and via the degree of conversion.

If carboxyl groups are present, they may in a subsequent step react with compounds containing one or more groups that can react with carboxylic acid, such as for example epoxy groups or β-hydroxyalkylamide groups. The amount of carboxylic acid in the final airdrying composition is between 0.01 and 0.5 mg equivalent/gram of polymer and preferably between 0,05 and 0.25.

If OH groups are present they may in a subsequent step react with a compound that can react with hydroxylgroups such as for example isocyanate and anhydrides.

The ratio hydroxyalkylamide end groups to carboxyalkylamide end groups generally ranges between 1:1000 and 5:1 and preferably between 1:100 and 3:1.

Due to side reactions during the preparation of the polymer it is possible that the composition according to the invention comprises also for example secundary amine groups having the formula (VI) : 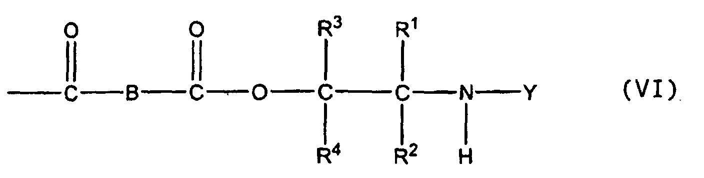 wherein:
Y= 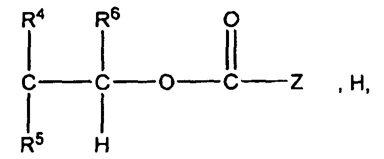 (C₁-C₂₀)(cyclo)alkyl or (C₆-C₁₀)aryl and
R¹, R², R³, R⁴ may, independently of one another, be the same or different, H, (C₆-C₁₀) aryl or (C₁-C₈)(cyclo)alkyl radical, and R⁵, R⁶ may furthermore be CH₂OH.

If amines are present they may in a subsequent step react with a compound that can react with amine groups, for example, isocyanates, epoxies, carboxylic acids or anhydrides.

Preferably, less than 0,1 meq amine/gram resin are present after the modification reaction to obtain an airdrying polymer with good drying properties. More preferably, less than 0,01 meqamine/gram resin are present.

The degree of branching and the functionality of the polymer are dependent on the starting materials and the polymer's molecular weight. Molecular weights higher than 5000 and the use of di- and/or trialkanolamines generally lead to highly branched structures with a carboxyalkyl functionality of ≥ 10.

The polymer can be combined with, for example, driers, solvents, additives, pigments, reactive diluents, extenders and fillers.

According to a further preferred embodiment of the invention the polyesteramide is obtained by reaction of a polyvalent carboxylic acid and an alkanolamine to form a hydroxyalkylamide after which the polyesteramide is obtained through polycondensation.

Preferably the polyvalent carboxylic acid is a dicarboxylic acid.

Generally the carboxylic acid applied is not capable of forming a cyclic anhydride.

Suitable dicarboxylic acids include for example isophthalic acid, terephthalic acid, cis- and trans hexahydroterepthalic acid, 2,6-naphthalene dicarboxylic acid, 4,4-oxybisbenzoic acid, 3,6-dichlorophthalic acid, tetrachlorophthalic acid,tetrabromophtalic acid, tetrahydrophthalic acid, hexachloroendomethylene tetrahydrophthalic acid, phthalic acid, azelaic acid, sebacic acid, decanedicarboxylic acid, adipic acid, diglycolic acid, succinic acid, fumaric acid, glutaric acid, malonic acid, dodecenyl succinic acid, 1,9 nonaic dicarboxylic acid and maleic acid or their mixtures such as for example a mixture containing terephtalic acid, isophtalic acid and/or adipic acid. Amount of acids of tri- or higher functional carboxylic acids in combination with a dialkanolamine. It is also possible to apply, for example, more than 20% by weight of the total amount tri- and higher acids in combination with at least 20% by weight (relative to the total amount of alkanolamines) monoalkanolamine. Suitable tricarboxylic acids include for example trimellitic acid, citric acid and 1,3,5-benzene tricarboxylic acid.

The alkanolamine can be a β-substituted alkanolamine for example a β-alkyl-substituted alkanolamine.

Suitable β-alkyl-substituted β-alkanolamines are for example diisopropanolamine, cyclohexyl isopropanolamine, N-(m)ethyl isopropanolamine, diisobutanolamine, di-β-cyclohexanolamine and/or n-butyl isopropanolamine. Most preferable are diisopropanolamine and/or diisobutanolamine are applied.

The equivalent ratio dicarboxylic acid: alkanolamine generally ranges between 1 : 1,3 and 1 : 2.

Said process can be applied at a temperature between 120°C and 200°C, a pressure between 0 and 5.10⁵ Pa, and can be applied in water and/or an organic solvent.

In an air drying coating composition, the polymer can be used as the only binder component, and can also be used in desired amounts together with prior art polymers applied in air drying coating compositions, such as for example alkyd resins. The amount of the polymer according to the invention compared to the total weight of binder polymers used, usually lies between 1% and 80% by weight and preferably between 5% and 50% by weight.

It is possible, for example to obtain a high-solid air drying composition with increased hardness by using for example 5-20% of the present polyesteramide in combination with a high solid alkyd resin.

The polyesteramide resins having for example unsaturated fatty acid groups, maleate groups, fumarate groups and/or (meth) acrylate groups can also be applied in radiation curable coatings. They are suitable for lacquers on wood, plastics, metal and paper with improved adhesion. They are also suitable for example as pigment wetting agent for UV flexo inks.

The coatings according to the invention can be applied, for example, on metal, wood, bricks, concrete and floors.

US-A-5053463 and US-A-5124433 disclose alkyd resins obtained with an alcohol-acid reaction whereas the present application is directed to a polyesteramide obtained with an amine-acid reaction. In the alcohol-acid reaction according to US-A-5053463 and US-A-5124433 the amine is present only in a relatively low amount whereas in the amine-acid reaction according to the present application the amine is present in an excess. US-A-5053463 and US-A-5124433 do not disclose dialkanolamide as a starting compound for the polymer. The process according to US-A-5053463 and US-A-5124433 does not result in a polyesteramide according to the present application and US-A-5053463 and US-A-5124433 do not disclose a polyesteramide according to the present application.

The invention will be elucidated with reference to the following, non-limiting examples.

### Experiment 1

### Preparation of a highly branched polymer based on cis-hexahydrophthalic anhydride, diisopropanolamine and tall oil fatty acid

254.7 g of cis hexahydrophthalic anhydride and 227.5 g of diisopropanolamine were introduced into a double-walled glass reactor, which could be heated by means of thermal oil, fitted with a mechanical stirrer, a distillation head and nitrogen and vacuum connections.

The reaction mixture was gradually heated, with stirring, to approximately 130°C.
After one hour at 130°C 425 grams of tall oil fatty acids were added, and then the mixture was gradually heated to 160°C.

The reaction water was removed by azeotropic distillation with xylene. After a total reaction time of 6 hours the polymer contained less than 0.1 meq/g carboxylic acid (titrimetrically determined) and no more water could be removed by azeotropic distillation. One hour of vacuum was applied to remove the xylene. After cooling down to 100°C the polymer was diluted with white spirit to a solids content of about 70 % w/w.

At a temperature of 80°C 18 grams of cyclohexylmonoisocyanate were added to the reaction mixture. After a reaction time of two hours using dibutylstanniumdilaurate as a catalyst the polymer contained <0.01 % of free isocyanate groups (titrimetrically determined).

After cooling the polymer solution was obtained as a yellow viscous mass.
The number average molecular mass was determined with the aid of GPC (universal calibration) and was found to be 3740 g/mol; weight average molecular mass was 52400 g/mol. The viscosity 70% solids in white spirit was 27 Pa·s.

### Experiment 2

### Preparation of a highly branched polymer based on phthalic anhydride, diisopropanolamine and tall oil fatty acid

245 g of phthalic anhydride and 228 g of diisopropanolamine were introduced into a double-walled glass reactor, which could be heated by means of thermal oil, fitted with a mechanical stirrer, a distillation head and nitrogen and vacuum connections. The reaction mixture was gradually heated, with stirring, to approx. 130°C. After one hour at 130°C 425 grams of tall oil fatty acid were added, and then the mixture was gradually heated to 160°C.

The reaction water was removed by azeotropic distillation with xylene. After a total reaction time of 6 hours the polymer contained less than 0.1 meq/g carboxylic acid (titrimetrically determined) and no more water could be removed by azeotropic distillation. One hour of vacuum was applied to remove the xylene.

After cooling down to 100°C the polymer was diluted with white spirit to a solids content of about 70 % w/w.

At a temperature of 80°C 23 grams of phthalic anhydride were added to the reaction mixture. After a reaction time of one hour the polymer contained 0.34 meq/g carboxylic acid (titrimetrically determined).

After cooling the polymer solution was obtained as a yellow viscous mass.
The viscosity 70 % in white spirit was higher than 100 Pa·s; the viscosity 50 % in white spirit was 4.3 Pa·s.

The number average molecular mass was determined with the aid of GPC (universal calibration) and was found to be 3100 g/mol; the weight average molecular mass was 22000 g/mol.

### Example I and Comparative Example 1

### Topcoat

A coating comprising a resin according to Experiment 1 is compared with a coating comprising an airdrying alkyd (Uralac AD56 W-50™ of DSM Resins) in white high gloss paint compositions.
Characteristics of the resin and Uralac AD56 W-50™ are given in Table 1.

**TABLE 1**

| Resin | **'Experiment 1'** | **Uralac AD56 W-50**™ |
|---|---|---|
| Oil length (%) | 50 | 52 |
| Solids content (weight-%) | 70 | 50 |
| Solvent | white spirit | white spirit |

### Table 2: Composition (in grams) of the white high gloss top coats.

**TABLE 2**

| | **I** | **A** |
|---|---|---|
| Resin ***'Experiment 1'*** | 142.8 | --- |
| ***Uralac AD56 W-50*™** | --- | 200.0 |
| White spirit | 57.2 | --- |
| Tioxide TR92™ | 80.0 | 80.0 |
| Bentone 38™, 10% in white spirit (NL Chemicals) | 2.0 | 2.0 |
| Nuodex™ Cobalt 10%™ (Servo) | 0.50 | 0.50 |
| Nuodex™ Calcium 5% (Servo) | 2.00 | 2.00 |
| Nuodex™ Zirconium 18 % (Servo) | 2.70 | 2.70 |
| Exkin 2™ (= MEK-oxime) | 0.60 | 0.60 |
| White spirit to obtain application viscosity of 35 sec. (DIN 6) | 51 | 39 |

### Table 3: Properties of the white high gloss paint.

**TABLE 3**

| | **I** | **A** |
|---|---|---|
| **Viscosity** (seconds DIN cup 6 at 21 °C) | 35 | 35 |
| Solids Content (w-%) | 54 | 56 |
| Layer thickness (µm) | 100 | 100 |
| **DRYING**^{**1)**} dust-dry | 2h.30 min | 2h.30 min |
| tack-free | 4h.15 min | 3h.00 min |
| **PENDULUM HARDNESS**^{**2)**} König (seconds) | | |
| 1 day | 50 | 23 |
| 1 week | 105 | 56 |
| 1 month | 118 | 78 |
| **GLOSS**^{**3)**} 20° | | |
| start | 83 | 78 |
| **WOM** (= weatherometer) 1 cycle | 66 | 53 |
| 2 cycles | 59 | 40 |
| 3 cycles | 56 | 6 |
| 4 cycles | 53 | 2 |

| | | |
|---|---|---|
| ¹⁾ DIN 53/150, glass | | |
| ²⁾ DIN 53/157, glass | | |
| ³⁾ ASTM D-523, aluminium | | |

The resin 'Experiment' outperforms Uralac AD56 W-50™, with respect to the early hardness, hardness build-up and outdoor durability.
(Early) hardness is an important coating property that is strongly related to both sensitivity towards (early) damage and (early) protective power.
Outdoor durability is an important coating property because durability is directly linked to environmentally aspects because durable materials are more environmentally friendly.

### Example 2 and Comparative Example B

### Primer

A primer coating composition comprising the resin from Experiment 2 is compared with a coating comprising an airdrying alkyd (***Uralac AM181 W-60™*** of DSM Resins).
Characteristics of the resins are given in Table 4.

**TABLE 4**

| Resin | **Experiment 2** | **Uralac AM181 W-60** |
|---|---|---|
| Oil length (%) | 50 | 50 |
| Solids content (weight-%) | 50 | 60 |
| Type of solvent | white spirit | white spirit |

### Table 5: composition (in grams) of the primer.

**TABLE 5**

| | **II** | **B** |
|---|---|---|
| Resin **'Experiment *2*'** | 144.0 | --- |
| ***Uralac AM181 W-60™*** | --- | 120.0 |
| Bayferrox™ 130 M | 45.0 | 45.0 |
| Micro Talc AT Extra™ | 27.0 | 27.0 |
| Millicarb™ | 9.0 | 9.0 |
| Bentone 38™, 10 % in white spirit | 4.5 | 4.5 |
| Nuodex™ Cobalt 10 % | 0.35 | 0.35 |
| Nuodex™ Calcium 5 % | 1.45 | 1.45 |
| Nuodex™ Zirconium 18 % | 2.00 | 2.00 |
| Exkin 2™ (= MEK-oxime) | 0.90 | 0.90 |
| White spirit to obtain application viscosity 35 sec. (DIN 6) | 16 | 26 |

### Table 6: Properties of the metal primer in different layer thickness

**TABLE 6**

| | II | B |
|---|---|---|
| Viscosity (seconds DIN cup 6 at 21 °C) | 35 | 35 |
| Solids Content (w-%) | 62 | 66 |
| Layer thickness (µm) | 100 | 100 |
| PENDULUM HARDNESS König (seconds) | | |
| 1 day | 50 | 28 |
| 1 week | 93 | 91 |
| 1 month | 94 | 96 |
| Layer thickness (µm) | 200 | 200 |
| PENDULUM HARDNESS König (seconds) | | |
| 1 day | 25 | 20 |
| 1 week | 55 | 28 |
| 1 month | 73 | 63 |
| Layer thickness (µm) | 300 | 300 |
| PENDULUM HARDNESS König (seconds) | | |
| 1 day | 18 | 15 |
| 1 week | 32 | 18 |
| 1 month | 67 | 32 |
| Layer thickness (µm) | 400 | 400 |
| PENDULUM HARDNESS König (seconds) | | |
| 1 day | 17 | 13 |
| 1 week | 27 | 16 |
| 1 month | 61 | 23 |

The resin 'Experiment 2' outperforms the airdrying alkyd with respect to early hardness, hardness build-up and throughhardening in thick layers.

## Claims

1. Airdrying coating composition comprising a polyesteramide containing at least two carboxyalkylamide groups derived from an unsaturated (C₁₀-C₂₈) carboxylic acid per molecule, **characterized in that** the polyesteramide is represented by formula (III): 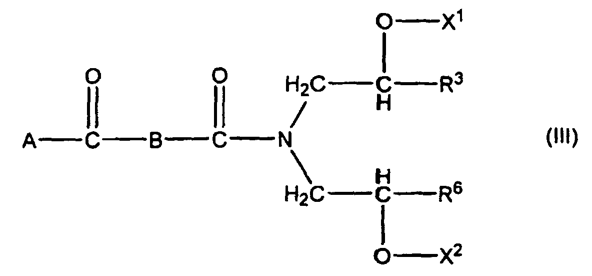 in which:
A= 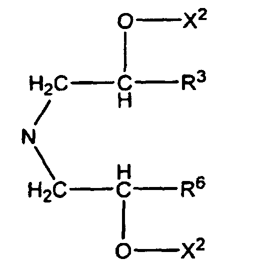 or OH
B = (C₂-C₁₂), optionally substituted, aryl or (cyclo)alkyl aliphatic diradical,
X¹ = 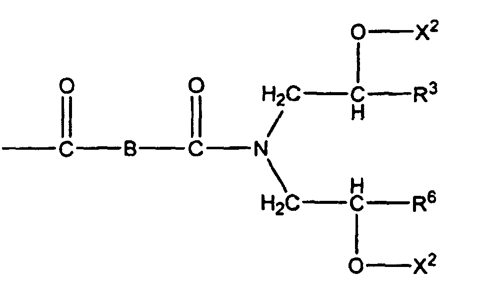
X² = H, X¹ OR 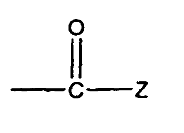 in which 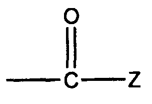 is derived from an unsaturated (C₁₀-C₂₈) monocarboxylic acid,
R³ = H, (C₆-C₁₀) aryl or (C₁-C₈)(cyclo)alkyl radical and
R⁶ = H, (C₆-C₁₀) aryl or (C₁-C₈)(cyclo)alkyl radical.

2. Composition according to Claim 1, **characterized in that** the iodine value of the polymer is between 80 and 250 gram I₂/100 gram polymer.

3. Composition according to any one of Claims 1-2, **characterized in that** the polyesteramide also contains β-hydroxyalkylamide and carboxyl groups, in amounts of between 0.01 and 2.0 mg equivalent/gram of polymer.

4. Composition according to Claim 1, **characterized in that** the polyesteramide is obtained by reaction of a polyvalent carboxylic acid and an alkanolamine after which the polyesteramide is obtained through polycondensation.

5. Coating obtained by curing a composition according to any one of Claims 1-4.

6. Entirely or partly coated substrate, **characterized in that** a coating according to Claim 5 is applied as the coating.

## Patentansprüche

1. Lufttrocknende Beschichtungszusammensetzung, umfassend ein Polyesteramid, welches mindestens zwei von einer ungesättigten (C₁₀-C₂₂)-Carbonsäure abgeleitete Carboxyalkylamidgruppen pro Molekül enthält, **dadurch gekennzeichnet, dass** das Polyesteramid durch Formel (III) dargestellt ist: 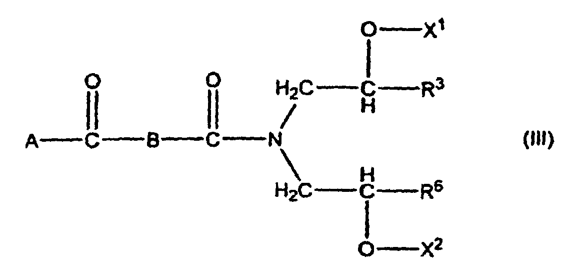 worin:
A= 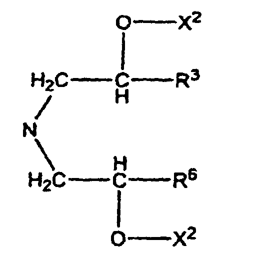 oder OH
B = (C₂-C₁₂), gegebenenfalls substituiert, Aryl- oder (Cyclo)alkyl-aliphatischer zweiwertiger Rest,
X¹ = 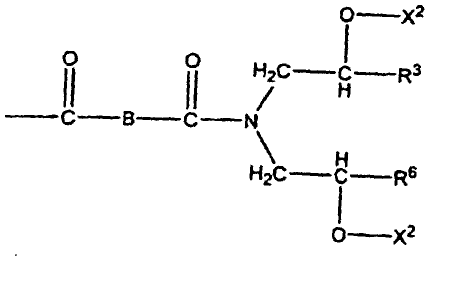
X² = H, X¹ OR 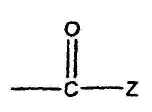 worin 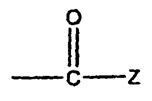 von einer ungesättigten (C₁₀-C₂₈)-Monocarbonsäure abgeleitet ist,
R³ = H, (C₆-C₁₀)-Aryl- oder (C₁-C₈)-(Cyclo)alkylrest und
R⁶ = H, (C₆-C₁₀)-Aryl- oder (C₁-C₈)-(Cyclo)alkylrest.

2. Zusammensetzung gemäß Anspruch 1, **dadurch gekennzeichnet, dass** die lodzahl des Polymers zwischen 80 und 250 Gramm I₂/100 Gramm Polymer beträgt.

3. Zusammensetzung gemäß einem der Ansprüche 1-2, **dadurch gekennzeichnet, dass** das Polyesteramid auch β-Hydroxyalkylamid- und Carboxylgruppen, in Mengen von zwischen 0,01 und 2,0 mg Äquivalent/Gramm des Polymers, enthält.

4. Zusammensetzung gemäß Anspruch 1, **dadurch gekennzeichnet, dass** das Polyesteramid durch Reaktion einer mehrwertigen Carbonsäure und einem Alkanolamin erhalten wird, nach welcher das Polyesteramid durch Polykondensation erhalten wird.

5. Beschichtung, erhalten durch Vemetzen einer Zusammensetzung gemäß einem der Ansprüche 1-4.

6. Vollständig oder teilweise beschichtetes Substrat, **dadurch gekennzeichnet, dass** eine Beschichtung gemäß Anspruch 5 als die Beschichtung aufgebracht wird.

## Revendications

1. Composition de revêtement séchant à l'air, comprenant un polyesteramide qui contient au moins deux groupes carboxyalkylamide dérivés d'un acide carboxylique insaturé en C₁₀-C₂₈ par molécule, **caractérisée en ce que** le polyesteramide est représenté par la formule (III) : 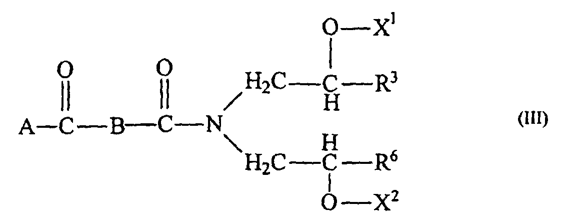 dans laquelle :
A= 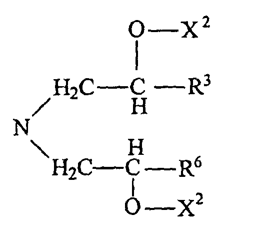 ou OH
B = un diradical aryl ou (cyclo)alkyl aliphatique en C₂-C₁₂ éventuellement substitué
X¹ = 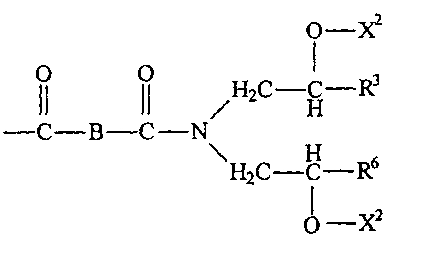
X² = H, X¹ ou 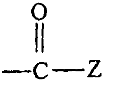 dans laquelle 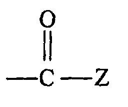 est dérivé d'un acide monocarboxylique insaturé en C₁₀-C₂₈,
R³ = H, radical aryle en C₆-C₁₀ ou radical (cyclo)alkyl aliphatique en C₁-C₈ et
R⁶ = H, radical aryle en C₆-C₁₀ ou radical (cyclo)alkyl aliphatique en C₁-C₈.

2. Composition selon la revendication 1, **caractérisée en ce que** l'indice d'iode du polymère est compris entre 80 et 250 grammes I₂/100 grammes de polymère.

3. Composition selon l'une quelconque des revendications 1 et 2, **caractérisée en ce que** le polyesteramide contient aussi des groupes β-hydroxyalkylamide et carboxyle, en des quantités comprises entre 0,01 et 2,0 mg équivalents/gramme de polymère.

4. Composition selon la revendication 1, **caractérisée en ce que** le polyesteramide est obtenu par réaction d'un acide carboxylkique polyvalent et d'une alkanolamine par laquelle le polyesteramide est obtenu par polycondensation.

5. Revêtement obtenu par durcissement d'une composition selon l'une quelconque des revendications 1 à 4.

6. Substrat entièrement ou partiellement revêtu, **caractérisé en ce qu'**un revêtement selon la revendication 5 est appliqué comme revêtement.
